Europäisches Patentamt

European Patent Office

Office européen des brevets

(11) Numéro de publication: **0 306 404**

**A1**

(12) # DEMANDE DE BREVET EUROPEEN

(21) Numéro de dépôt: 88402191.6

(51) Int. Cl.⁴: **A 21 C 15/00**

(22) Date de dépôt: 30.08.88

(30) Priorité: 02.09.87 FR 8712185

(43) Date de publication de la demande:
08.03.89 Bulletin 89/10

(84) Etats contractants désignés:
AT BE CH DE ES FR GB GR IT LI LU NL SE

(71) Demandeur: **GOODINN**
**15, rue de la Reynie**
**F-75004 Paris (FR)**

(72) Inventeur: **Ochs, Jean**
**21, avenue Pauline**
**F-94500 Champigny sur Marne (FR)**

**Rauline, Marjolaine, Epouse Ochs Jean**
**21, avenue Pauline**
**F-94500 Champigny sur Marne (FR)**

(74) Mandataire: **Boillot, Marc**
**SOCIETE NATIONALE ELF AQUITAINE Division**
**Propriété Industrielle Tour Elf**
**F-92078 Paris la Défense Cédex 45 (FR)**

(54) **Dispositif constituant un emballage destiné à recevoir une portion individuelle culinaire preparée d'avance.**

(57) Dispositif constituant un emballage destiné à recevoir une portion individuelle culinaire préparée d'avance. Ledit dispositif se présente sous la forme d'une boîte allongée composée de deux semi-éléments indépendants, à savoir un corps (A) et un couvercle (B), qui sont assemblés pour constituer la boîte, par exemple en faisant appel à un système d'assemblage clips/glissières (27, 25), de telle sorte que le semi-élément formant le couvercle (B) ferme le semi-élément formant le corps (A) avec possibilité aux semi-éléments (A, B) de coulisser longitudinalement l'un par rapport à l'autre. Ce dispositif est utilisable en particulier pour transférer la portion culinaire qu'il renferme dans un pain en vue de former un sandwich.

Fig. 5

EP 0 306 404 A1

Bundesdruckerei Berlin

## Description

## DISPOSITIF CONSTITUANT UN EMBALLAGE DESTINE A RECEVOIR UNE PORTION INDIVIDUELLE CULINAIRE PREPAREE D'AVANCE

L'invention concerne un dispositif constituant un emballage individuel jetable destiné à recevoir une portion individuelle culinaire, salée ou sucrée, préparée à l'avance, ledit dispositif permettant la conservation, le stockage et la distribution de ladite portion et également sa préparation dans un sandwich ou, tout simplement, dans une assiette.

Dans le cadre de la restauration rapide, à domicile et hors domicile, on trouve divers appareils plus ou moins complexes, qui sont susceptibles d'introduire un aliment dans un pain. Ces appareils ne sont toutefois pas multifonctionnels.

A ce jour, un seul dispositif connu permet, à partir de la réunion de trois éléments distincts, de satisfaire simultanément les caractéristiques énoncées plus haut, c'est-à-dire d'obtenir un dispositif jetable qui permette la conservation, le stockage et la distribution de la portion culinaire et également sa préparation dans un sandwich ou dans une assiette.

Le dispositif jetable actuellement connu (EP-A-0196983) comprend principalement un corps creux tubulaire muni d'une fente horizontale traversée par un curseur solidaire d'un piston, ledit piston étant monté coulissant à l'intérieur du corps creux tubulaire et assurant, par déplacement du curseur auquel il est lié, le transfert de la portion culinaire placée dans le corps tubulaire dans le pain ou dans une assiette.

Malgré un aspect très séduisant, un tel dispositif présente un handicap pour sa commercialisation par suite de sa haute valeur ajoutée, qui résulte d'une technique de fabrication délicate à mettre en oeuvre, et également de son utilisation. En effet, le corps creux tubulaire est réalisé en matière plastique par moulage par injection, ce qui exige la mise en place d'un noyau dans le moule. Ce noyau est difficile à maintenir parfaitement en place, d'où une gêne importante au niveau de la fiabilité du moule et des cadences de production. Par ailleurs, la fente longitudinale du corps creux tubulaire dans laquelle se déplace le curseur du piston laisse échapper des composants de la portion culinaire, qui giclent et peuvent salir l'utilisateur. Enfin, l'étanchéité du dispositif est assurée par une enveloppe dont la réalisation est difficile.

L'invention propose un dispositif constituant un emballage individuel jetable destiné à recevoir une portion individuelle culinaire, qui permet de remédier aux inconvénients du dispositif jetable précité. Le dispositif selon l'invention possède une structure qui permet de le fabriquer plus économiquement, d'où une réduction de sa valeur ajoutée, et qui en outre améliore ses facilités d'emploi en supprimant en particulier les risques de souillures de l'utilisateur.

Le dispositif selon l'invention se caractérise en ce qu'il se présente sous la forme d'une boîte allongée composée de deux semi-éléments indépendants, à savoir un corps (A) et un couvercle (B), lesdits semi-éléments étant agencés de telle sorte qu'au moins le corps (A) ait la forme d'une coquille allongée présentant deux bords longitudinaux parallèles et qu'après assemblage desdits semi-éléments l'un avec l'autre pour constituer la boîte, le semi-élément formant le couvercle (B) ferme le semi-élément constituant le corps (A) de manière à ce que lesdits semi-éléments puissent coulisser longitudinalement l'un par rapport à l'autre.

La réalisation du dispositif selon l'invention en deux semi-éléments élimine la nécessité, lors de la production desdits semi-éléments par moulage par injection, de disposer d'un noyau, ce qui améliore grandement la fiabilité, la longévité et les cadences de l'outil de production. En outre, l'absence de fente longitudinale et de curseur associé dans la boîte résultant de l'assemblage des deux semi-éléments supprime les risques de souillures par le contenu de la boîte. Enfin, la facilité avec laquelle le transfert de la portion culinaire dans la boîte peut être réalisé garantit la propreté et la sécurité.

Avantageusement, l'un des semi-éléments de l'emballage en forme de boîte constituant le dispositif selon l'invention, désigné ici par premier semi-élément, comporte une extrémité avant en forme de semi-embout et une extrémité arrière ouverte, tandis que l'autre semi-élément, designé ici par deuxième semi-élément, présente également une extrémité avant formant un semi-embout, qui est agencé pour constituer un embout, après assemblage des semi-éléments, avec le semi-embout porté par le premier semi-élément, et une extrémité arrière pourvue d'un fond réalisé pour obturer également l'extrémité arrière ouverte du premier semi-élément, lorsque lesdits premier et deuxième semi-éléments sont assemblés pour constituer la boîte.

Les semi-éléments associés par assemblage pour former la boîte peuvent avoir des formes variées. Ainsi le semi-élément formant le corps (A) de la boîte peut présenter une section transversale ayant une forme de U, U évasé, L, V ou encore d'arc de cercle, tandis que le semi-élément formant le couvercle (B) de la boîte peut présenter l'une ou l'autre des sections transversales précitées ou encore une section transversale rectiligne, ce qui conduit pour la boîte à une section transversale pouvant avoir, par exemple, une forme de carré, rectangle, losange, cercle, triangle, demi-cercle, hexagone voire même une forme lenticulaire.

L'embout de la boîte, qui résulte de l'association des semi-embouts formant les extrémités avant des semi-éléments assemblés pour constituer ladite boîte, présente avantageusement un profil réalisé, en donnant aux semi-embouts les formes appropriées, de telle sorte que ledit profil n'offre pas d'obstacle au bon écoulement de la portion culinaire contenue dans la boîte lors du transfert de ladite portion culinaire dans un pain ou dans une assiette. En particulier ledit embout présente la forme d'une pointe ou d'un biseau. Un embout en forme de pointe peut être obtenu en donnant au semi-embout de l'un des semi-éléments une forme semi-conique ou pyramidale, tandis que le semi-embout de l'autre semi-élément est semi-conique, pyramidal ou plan. On peut réaliser un embout de forme biseautée en donnant une forme biseautée au semi-embout de l'un des semi-éléments et une forme biseautée ou plane au semi-embout de l'autre semi-élément. L'embout formé par l'association des semi-embouts des semi-éléments associés est généralement fixe. On peut cependant envisager le cas où l'un au moins des semi-embouts constituant l'embout est un semi-embout mobile, qui est formé de plusieurs parties jointives articulées chacune, par une charnière, à la partie avant du semi-élément correspondant et qui peut donc s'ouvrir par pivotement des parties le constituant autour desdites charnières pour permettre le passage d'une buse de remplissage. Lesdites charnières peuvent être réalisées, par exemple, par une épaisseur moindre de matière dans la paroi du semi-élément.

De préférence, le fond situé à l'extrémité arrière de l'un des semi-éléments est un fond mobile, qui est articulé par une charnière à ladite extrémité du semi-élément et que l'on peut rabattre par rotation autour de cette charnière pour réaliser l'obturation des extrémités arrières des semi-éléments assemblés pour former la boîte. Ladite charnière peut être obtenue, par exemple, par une moindre épaisseur de matière dans la paroi du semi-élément. Le fond mobile précité peut être en position initiale ouverte, ce qui permet le passage d'une buse doseuse destinée au remplissage de la boîte par la portion culinaire, après quoi ledit fond mobile est rabattu en position d'obturation par rotation autour de la charnière. Ce fond mobile est agencé pour que l'obturation soit réalisée de manière étanche. Pour ce faire, la périphérie du fond mobile, qui après rabattement vient en contact avec la face interne de la paroi des semi-éléments assemblés, peut avoir, par exemple, une forme permettant d'obtenir une étanchéité par coincement ou peut encore être pourvue d'au moins une lèvre d'étanchéité pour réaliser l'étanchéité par le biais de cette lèvre.

Le fond situé à l'extrémité arrière de l'un des semi-éléments et obturant les extrémités arrières des semi-éléments assemblés, c'est-à-dire l'extrémité arrière de la boîte peut être pourvu extérieurement d'un poussoir formant garde et protégeant des exsudats susceptibles de s'échapper de la boîte au niveau du fond précité. Ledit poussoir peut être constitué, par exemple, d'une pluralité d'ailettes de hauteur suffisante pour assurer le rôle de garde.

Le semi-élément présentant une extrémité arrière ouverte, c'est-à-dire exempte de fond, peut être pourvu de moyens de préhension à cette extrémité. En particulier lesdits moyens sont disposés de manière à être situés de part et d'autre du fond solidaire de l'extrémité arrière de l'autre semi-élément et du poussoir dont peut être éventuellement pourvu ledit fond. Les moyens de préhension peuvent consister notamment en oreilles de préhension, qui peuvent présenter une face externe pourvue d'aspérités pour faciliter leur préhension.

Avantageusement, les deux semi-éléments assemblés pour former la boîte comportent chacun des moyens coopérant pour permettre l'assemblage de ces semi-éléments par un clipsage longitudinal, qui rend possible le coulissement longitudinal desdits semi-éléments l'un par rapport à l'autre sous l'effet d'un léger effort de traction. Les moyens d'assemblage par clipsage peuvent comporter des clips disposés sur l'un des semi-éléments et des glissières disposées sur l'autre semi-élément et adaptées pour recevoir lesdits clips et de préférence les cacher. Lesdites glissières peuvent être prévues indifféremment sur la surface interne ou externe du semi-élément les portant.

L'un au moins des semi-éléments peut encore comporter des évents occultables pour permettre l'évacuation des gaz éventuels lors de la remise en température du contenu de la boîte avant consommation de la portion culinaire, lesdits évents étant formés par des évidements discontinus pratiqués dans les parois du semi-élément considéré.

Les deux semi-éléments assemblés pour constituer la boîte peuvent être constitués en un materiau rigide ou semi-rigide tel que matière plastique et notamment polypropylène, ou encore carton ou métal.

Ces deux semi-éléments sont fabriqués séparément, notamment par moulage par injection d'une matière plastique ou encore par emboutissage d'une feuille métallique ou de carton, puis assemblés, par exemple par clipsage si une telle forme d'assemblage est utilisée, pour former la boîte, ladite boîte étant éventuellement revêtue d'une enveloppe, par exemple en matière plastique, carton ou métal, la protégeant contre toute souillure possible.

Selon le mode de remplissage choisi, la portion culinaire peut être introduite dans la boîte, à partir d'une buse doseuse, soit par la partie avant de ladite boîte, lorsque cette dernière possède un embout avant susceptible de s'ouvrir, ou encore par la partie arrière de cette boîte, lorsque l'arrière de la boîte est obturé par un fond mobile rabattable.

Comme indiqué précédemment, le dispositif selon l'invention est tout particulièrement utilisable pour stocker une portion culinaire individuelle, puis transférer ladite portion culinaire dans un pain en vue de préparer un sandwich, comme il sera décrit en détail ci-après, ou simplement dans une assiette, après mise en température éventuelle de la portion culinaire par passage du dispositif renfermant cette portion culinaire dans un four à micro-ondes ou dans un bain-marie.

D'autres caractéristiques et avantages du dispositif selon l'invention apparaîtront à la lecture de la description suivante de formes de réalisation dudit dispositif données, à titre illustratif et non limitatif en référence au dessin annexé, sur lequel :

-les figures 1 à 3 montrent schématiquement, en coupe longitudinale, le principe du transfert d'une portion culinaire dans un pain en vue d'obtenir un sandwich, en faisant appel pour ce transfert à un dispositif selon l'invention comportant un corps (A) pourvu d'un fond arrière mobile et un couvercle (B) muni d'oreilles de préhension à son extrémité arrière ;

-la figure 4 est une coupe longitudinale indiquant une définition du volume étanche dans une certaine forme d'exécution du dispositif ;

-la figure 5 est une vue en perspective représentant le corps (A) et le couvercle (B), non assemblés et vides, du dispositif schématisé sur les figures 1 à 3 ;

-la figure 6 est un détail d'une forme d'exécution de charnière ;

-les figures 7 et 8 schématisent deux formes de réalisation de l'étanchéité du fond mobile obturant l'arrière de la boîte ;

-la figure 9 est un détail du système d'assemblage clips/glissière, dont est pourvu le dispositif de la figure 5 ;

-la figure 10 est une vue en perspective du dispositif de la figure 5 après assemblage ;

-les figures 11 à 20 sont des schémas de principe de dispositions des sections du corps (A) et du couvercle (B) de la boîte ;

-les figures 21 à 24 représentent schématiquement, en perspective, des formes de l'embout avant de la boîte ;

-les figures 25 à 27 donnent schématiquement les trois phases de la mise en oeuvre du dispositif de la figure 10 dans la préparation d'un sandwich ; et

-les figures 28 et 29 schématisent la position de l'embout mobile avant ou la position du fond mobile arrière selon le choix retenu pour le remplissage de la boîte par la portion culinaire.

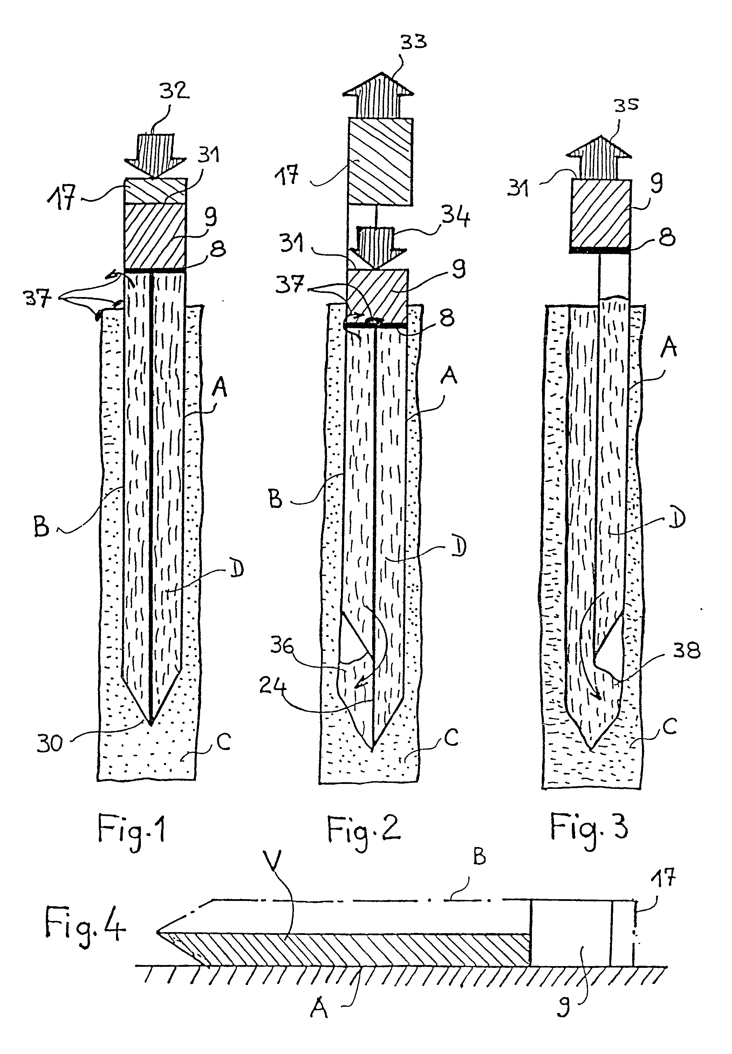

Les schémas représentés aux figures 1 à 3 mettent en évidence le principe fonctionnel du transfert, dans un pain (C), d'une portion culinaire (D) contenue dans un dispositif selon l'invention, à savoir un emballage en forme de boîte, composé d'un corps (A) comportant un fond (8), dont la face externe est munie d'un poussoir (9) formant une garde, et d'un couvercle (B) présentant à son extrémité arrière une zone de préhension formée d'oreilles (17) de préhension.

Le processus de transfert comporte trois phases, comme explicité ci-après.

Dans une première phase (figure 1), on fait pénétrer le dispositif, par son embout (30), dans le pain (C) maintenu verticalement en exerçant une poussée (32) sur l'extrémité arrière du dispositif par l'intermédiaire de la zone (17) de préhension jusqu'à ce que le poussoir (9) du dispositif ait pénétré légèrement dans le pain comme le montre la figure 2. La pénétration du dispositif dans le pain est facilitée par la forme pointue de l'embout (30).

Dans une deuxième phase (figure 2), on réalise le retrait du couvercle (B). Cette opération s'effectue en exerçant sur ledit couvercle un effort de traction (33) par l'intermédiaire de la zone de préhension (17), tout en exerçant une pression (34) sur la partie extrême (31) du poussoir (9) formant garde associé au fond (8) de manière à maintenir le corps (A) immobile et par voie de conséquence de retenir la portion culinaire (D) à l'intérieur du pain (C). Le couvercle (B) est ainsi animé d'un mouvement de translation longitudinale par rapport au corps (A), dont le résultat est de créer progressivement une ouverture (24) dans le dispositif, par laquelle la portion culinaire (D) s'écoule dans l'espace (36) libéré à l'intérieur du pain (C) par le retrait du couvercle (B).

Au cours de ces deux phases, si l'étanchéité du fond (8) laisse échapper des exsudats (37), ces derniers n'atteindront en aucune manière la surface postérieure (31) du poussoir (9) car ils s'écouleront soit le long du couvercle (B) et du pain (C) ou bien seront emprisonnés dans le poussoir (9) formant garde.

Cette deuxième phase se termine après que le couvercle (B) ait été entièrement retiré du pain (C).

Dans une troisième phase (figure 3), le corps (A) du dispositif resté dans le pain (C) est saisi à son tour par le poussoir (9), qui constitue alors une zone de préhension, et l'on exerce sur ce poussoir un effort de traction (35) vers l'arrière jusqu'à ce que ledit corps (A) se trouve en dehors du pain (C). Pendant ce retrait du corps (A), la portion culinaire s'est écoulée, par gravité, dans l'espace (38) libéré dans le pain (C) par ledit retrait pour occuper entièrement ledit espace.

La figure 4 montre quel peut être le moindre volume V étanche lorsque le dispositif repose à plat, par exemple, dans un four à micro-ondes. Ce volume est limité par l'emplacement du système d'assemblage des semi-éléments corps (A) et couvercle (B), par exemple système clips/glissières, qui n'est pas obligatoirement étanche.

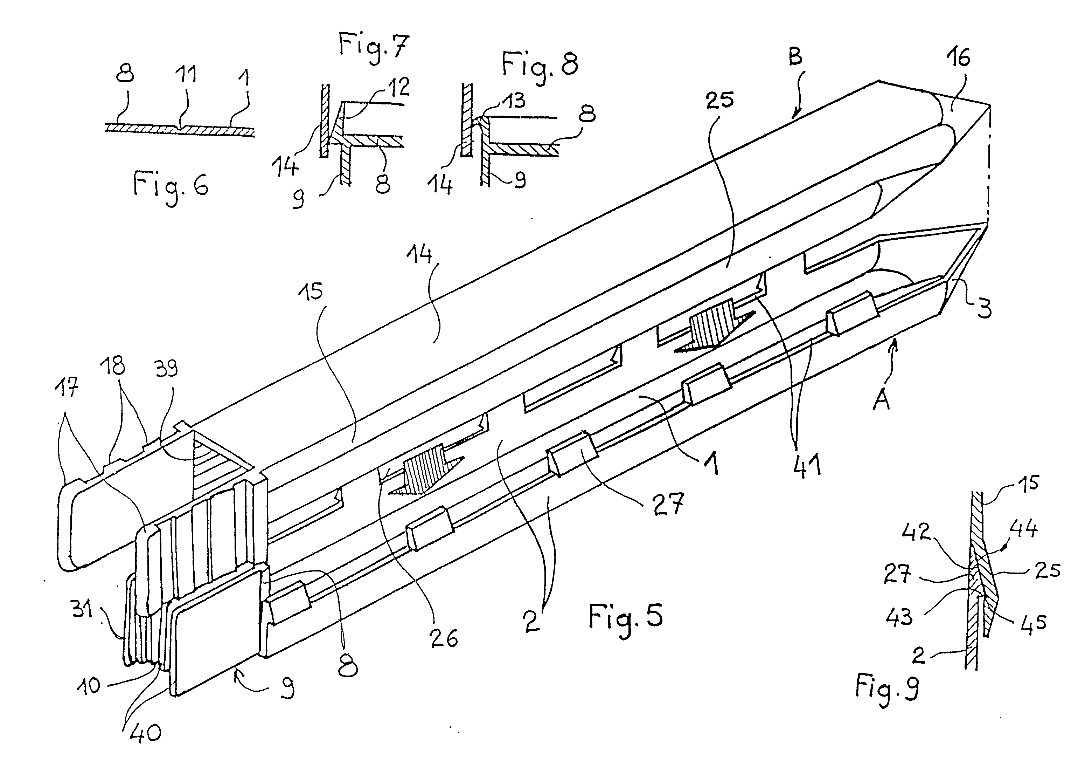

Sur la figure 5 sont représentés en détail les semi-éléments, à savoir corps (A) et couvercle (B), du dispositif schématisé sur les figures 1 à 3. Le couvercle (B), en forme de demi-coquille allongée présentant une section transversale en U, est constitué d'un fond (14), de deux côtés latéraux (15) prolongeant latéralement ledit fond et limités chacun par un bord longitudinal, d'une extrémité avant réunissant ledit fond (14) et les côtés latéraux (15) en formant un semi-embout (16) conique et d'une extrémité arrière (39) ouverte. Les côtés latéraux (15) du couvercle (B) se prolongent au-delà de l'extrémité arrière (39) par des oreilles de préhension (17) dont la hauteur est sensiblement égale à celle de la boîte résultant de l'assemblage du corps (A) et du couvercle (B). Sur leur face externe les oreilles (17) de préhension sont pourvues d'aspérités (18) en forme de cannelures, qui permettent d'améliorer la préhension. Le corps (A), en forme de demi-coquille allongée présentant également une section transversale en forme de U, est constitué d'un fond (1), de deux côtés latéraux (2) prolongeant latéralement ledit fond et limités chacun par un bord longitudinal (41), d'une extrémité avant réunissant ledit fond (1) et les côtés latéraux (2) en formant un semi-embout (3) conique, complémentaire du semi-embout (16) du couvercle (B), et d'une extrémité arrière pourvue d'un fond (8) mobile agencé pour obturer l'extrémité arrière du corps (A) et également celle du couvercle (B) lorsque ces deux semi-éléments sont assemblés pour former la boîte constituant le dispositif selon l'invention. Comme indiqué sur la figure 6, le fond (8) est relié au fond (1) du corps (A) par une moindre épaisseur de matière qui constitue une charnière (11) autour de laquelle ledit fond (8) peut être rabattu pour réaliser l'obturation des extrémités arrières du corps (A) et du couvercle (B). La périphérie du fond mobile (8), qui en position d'obturation vient en contact avec la face interne du corps (A) et celle du couvercle (B), comporte, comme indiqué sur la figure 7, une partie annulaire (12) convergeant vers l'avant et présentant des dimensions permettant de réaliser l'étanchéité par coincement. Comme indiqué sur la figure 8, une autre solution pour réaliser l'étanchéité du fond mobile (8) avec la face interne du corps (A) et celle du couvercle (B) consiste à munir la périphérie dudit fond (8) d'un rebord (13) évasé jouant le rôle de lèvre d'étanchéité. La face externe du fond mobile (8) est pourvue d'une pluralité d'ailettes (40) parallèles au plan des côtés latéraux (2) du corps (A) et séparées chacune de la suivante par un espace (10) susceptible d'emprisonner les exsudats pouvant s'échapper du dispositif au niveau du fond mobile (8), l'ensemble desdites ailettes formant un poussoir (9) dont la partie utilisable pour exercer une pression est formée des chants (31) des ailettes (40) qui ne sont pas en contact avec le fond mobile (8), ledit poussoir étant susceptible de s'insérer entre les oreilles (17) de préhension du couvercle (B). La hauteur des ailettes (40) est sensiblement égale à celles des oreilles (17) de préhension et la longueur desdites ailettes est plus faible que celle desdites oreilles (17) en étant toutefois suffisante pour que le poussoir (9) constitue une garde protégeant des exsudats susceptibles de s'échapper du dispositif au niveau du fond (8) et de passer dans les espaces (10) entre les ailettes.

Les bords longitudinaux (41) des côtés latéraux (2) du corps (A) sont pourvus de clips (27) séparés par des zones (26) formant évents, tandis que les bords longitudinaux des côtés latéraux (15) du couvercle (B) se terminent par une lame (25) en forme de glissière qui est adaptée pour coiffer les clips, lors de l'assemblage des semi-éléments corps (A) et couvercle (B), et assurer en coopération avec lesdits clips un assemblage de ces semi-éléments par verrouillage tout en autorisant un coulissement longitudinal de l'un des semi-éléments par rapport à l'autre. Par exemple, comme schématisé sur la figure 9, les clips (27) comportent une rampe (42) qui est inclinée vers l'extérieur et se termine par un décrochement 43), tandis que la lame formant chaque glissière (25) présente sur sa face interne une partie inclinée (44) qui est complémentaire de la rampe (42) des clips (27) et se termine par une saillie (45) agencée pour venir en butée contre le décrochement (43) des clips (27), lorsque le couvercle (B) est emboîté sur le corps (A) pour former la boîte, ce qui assure un verrouillage du couvercle (B) sur le corps (A) tout en permettant un coulissement longitudinal de ces deux semi-éléments l'un par rapport à l'autre sous l'effet d'une traction modérée.

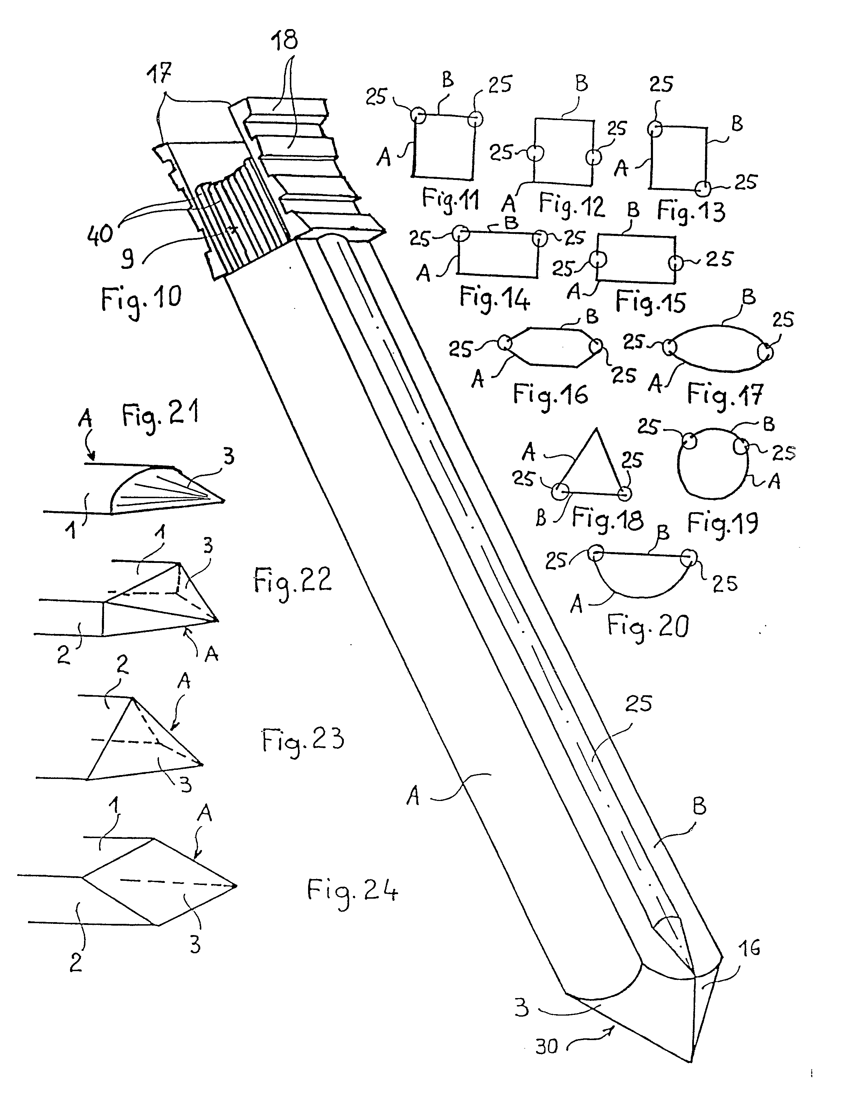

Par emboîtement du couvercle (B) sur le corps (A), on obtient une boîte telle que représentée sur la figure 10, ladite boîte ayant une section transversale carrée ou rectangulaire et présentant un embout conique (30) formé par la réunion des semi-embouts (3) du corps (A) et (16) du couvercle (B). Sur cette figure sont également apparents le poussoir (9) formé d'ailettes (40) espacées, qui est disposé entre les oreilles (17) de préhension, et l'une des glissières (25) cachant les clips.

Comme schématisé sur les figures 21 à 24, on pourrait en variante donner à au moins l'un des semi-éléments, par exemple au corps (A), la forme d'un semi-cylindre terminé vers l'avant par un semi-embout, par exemple semi-embout (3), semi-conique (figure 21) ou encore la forme d'un dièdre terminé vers l'avant par un semi-embout, par exemple semi-embout (3), de forme pyramidale (figure 23), ou bien en conservant la section en U du semi-élément on pourrait donner audit semi-embout, par exemple semi-embout (3), une forme pyramidale (figure 22) ou une forme biseautée (figure 24).

Sur les figures 11 à 20 sont schématisés différents exemples de profils que peuvent présenter la section transversale de la boîte et les sections transversales des semi-éléments, à savoir corps (A) et couvercle (B), constituant ladite boîte. Par exemple, une boîte à section transversale carrée ou rectangulaire (figures 11 à 15) peut être réalisée avec un corps (A) présentant une section transversale en U et un couvercle (B) ayant une section transversale en U (figures 12 et 15) ou une section transversale rectiligne (figures 11 et 14) ou bien avec un corps (A) et un couvercle (B) ayant chacun une section transversale en L (figure 13). Une boîte à section transversale en forme d'hexagone (figure 16) ou lenticulaire (figure 17) peut être obtenue à partir d'un corps (A) et d'un couvercle (B) ayant chacun une section transversale en U évasé (figure 16) ou en arc de cercle (figure 17). Une boîte ayant une section transversale triangulaire (figure 18) ou hémi-cylindrique (figure 20) peut être réalisée en associant un couvercle (B) ayant une section transversale rectiligne à un corps (A) présentant une section transversale en V (figure 18) ou en demi-circonférence (figure 20). Enfin, une boîte à section transversale circulaire peut être obtenue en associant un corps (A) ayant une section transversale en forme d'arc de cercle et un couvercle (B) ayant une section transversale consistant en l'arc de cercle complémentaire pour terminer le cercle (figure 19).

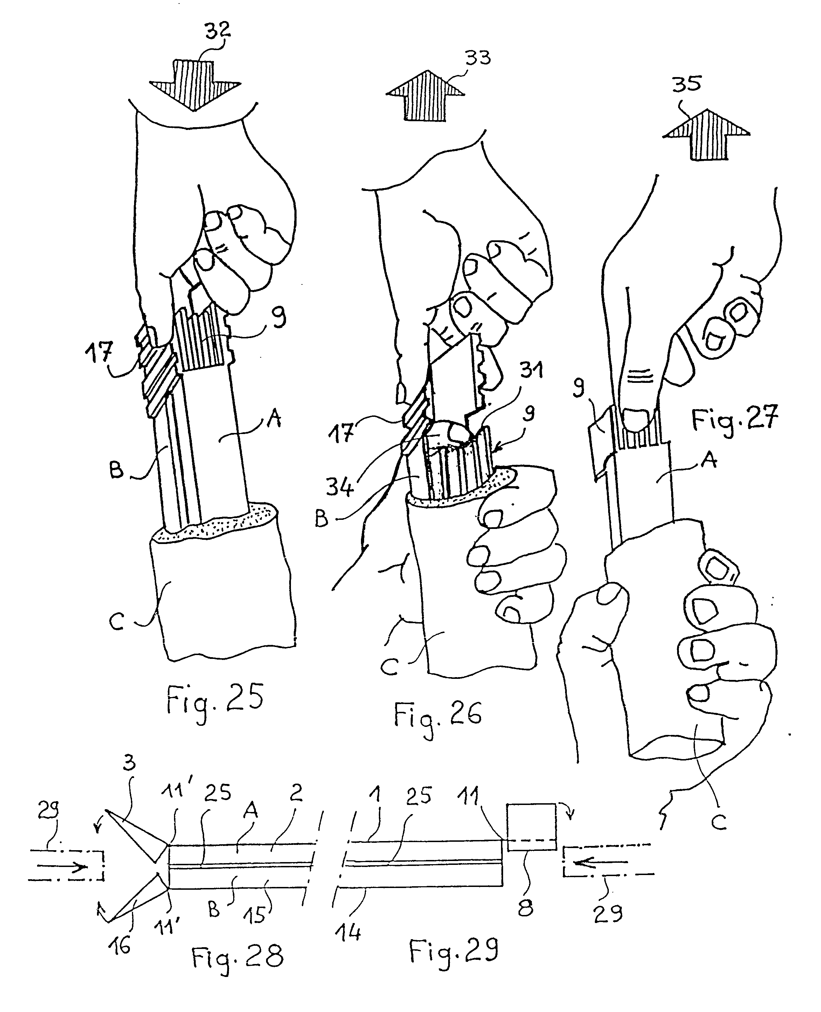

En se référant aux figures 25 à 27, la préparation d'un sandwich en utilisant la boîte des figures 5 et 10 renfermant une portion culinaire comporte les trois phases explicitées ci-après et dont le principe a déjà été schématisé en référence aux figures 1 à 3.

Tout d'abord, si besoin est, avant de préparer le sandwich, l'élément, constitué de la boîte contenant la portion culinaire et éventuellement protégée par une enveloppe, est porté à la température désirée par passage dans un four à micro-ondes ou par immersion dans un bain-marie.

Ensuite, dans une première phase (figure 25), l'élément précité, après retrait de l'enveloppe protectrice si elle est présente, est saisi avec une main par les oreilles de préhension et introduit, côté embout (30), dans le pain (C) tenu sensiblement verticalement, en exerçant une pression (32) par l'intermédiaire de la main tenant les oreilles (17) de préhension jusqu'à ce que le poussoir (9) de la boîte ait pénétré légèrement dans le pain (C) comme le montre la figure 26.

Dans une deuxième phase (figure 26), le pouce de la main qui maintient le pain exerce une pression (34) sur la partie extrême (31) du poussoir (9) tandis que l'autre main exerce un effort de traction (33) sur les oreilles de préhension (17), ce qui a pour effet d'extraire le couvercle (B) du pain. Un mouvement longitudinal de translation du couvercle (B) par rapport au corps (A) est ainsi réalisé. Au cours de ce mouvement, le couvercle (B) est retiré du pain sans que pour autant la portion culinaire, qui est maintenue dans le pain sous l'effet de la pression (34) sur le poussoir (9) du corps (A), s'échappe à l'extérieur. En se retirant, le couvercle (B) crée un espace important dans le pain dans lequel s'écoule la portion culinaire.

Dans une troisième phase (figure 27), le corps (A) est extrait du pain (C) en exerçant manuellement un effort de traction sur le poussoir (9) qui joue alors le rôle d'organe de préhension pour le corps (A). La portion culinaire, dont le coefficient de frottement sur la paroi interne du corps (A) est faible, s'écoule aisément dans l'espace laissé dans le pain (C) par le retrait du corps (A) et demeure dans le pain.

Durant les première et deuxième phases , le poussoir (9) constitue une garde protégeant les doigts, et notamment le pouce appuyant sur le poussoir, des exsudats chauds qui viendraient à suinter au niveau du fond arrière de la boîte, lesdits exsudats étant piégés dans les alvéoles ou espaces (10) séparant les ailettes (40) du poussoir (9).

Comme indiqué sur les figures 28 et 29, la portion culinaire peut être introduite dans la boîte, à partir d'une buse doseuse (29), soit par l'extrémité avant de ladite boîte (figure 28) lorsque cette dernière comporte un embout (30) formé par la réunion de deux semi-embouts mobiles, (3) pour le corps (A) et (16) pour le couvercle (B), qui sont articulés à l'extrémité avant de la boîte semi-étanche par des charnières telles que (11'), soit par l'extrémité arrière de la boîte (figure 29) lorsque cette dernière comporte un fond arrière (8) mobile articulé à l'extrémité arrière du corps (A) ou du couvercle (B) par une charnière (11). Avant remplissage, les semi-embouts (3) et (16) ou le fond (8) mobiles sont dans des positions représentées sur la figure 28 ou la figure 29 et permettant l'introduction d'une buse doseuse pour le remplissage. Lorsque cette opération est terminée, la fermeture est obtenue par simple pression de telle sorte que lesdits semi-embouts ou ledit fond basculent autour de leurs charnières dans le sens indiqué par les flèches.

Bien entendu, l'invention ne se limite pas aux modes de réalisation décrits et représentés, mais elle englobe au contraire les diverses variantes accessibles au spécialiste en restant dans le cadre de l'invention.

## Revendications

1 - Dispositif constituant un emballage individuel jetable destiné à recevoir une portion culinaire individuelle. caractérisé en ce qu'il se présente sous la forme d'une boîte allongée composée de deux semi-éléments indépendants, à savoir un corps (A) et un couvercle (B), lesdits semi-éléments étant agencés de telle sorte qu'au moins le corps (A) ait la forme d'une demi-coquille allongée présentant deux bords longitudinaux parallèles et qu'après assemblage desdits semi-éléments l'un avec l'autre pour constituer la boîte, le semi-élément formant le couvercle (B) ferme le semi-élément constituant le corps (A) de manière à ce que lesdits semi-éléments puissent coulisser longitudinalement l'un par rapport à l'autre.

2 - Dispositif selon la revendication 1, caractérisé en ce que l'un (B) des semi-éléments de l'emballage en forme de boîte, désigné ici par premier semi-élément, comporte une extrémité avant en forme de semi-embout (16) et une extrémité arrière (39) ouverte, tandis que l'autre semi-élément (A), désigné ici par deuxième semi-élément, présente également une extrémité avant formant un semi-embout (3), qui est agencé pour constituer un embout (30), après assemblage des semi-éléments (A, B), avec le semi-embout (16) porté par le premier semi-élément (B), et une extrémité arrière pourvue d'un fond (8) réalisé pour obturer également l'extrémité arrière ouverte (39) du premier semi-élément (B), lorsque lesdits premier et deuxième semi-éléments sont assemblés pour constituer la boîte.

3 - Dispositif selon la revendication 1 ou 2, caractérisé en ce que le semi-élément formant le corps (A) de la boîte présente une section transversale en forme de U, U évasé, L, V ou encore d'arc de cercle et le semi-élément formant le couvercle (B) de ladite boîte présente une section transversale en forme de U, U évasé, L, V ou encore une section transversale rectiligne.

4 - Dispositif selon la revendication 2 ou 3, caractérisé en ce que l'embout (30) de la boîte, qui résulte de l'association des semi-embouts (16, 3) formant les extrémités avant des semi-éléments (B, A) assemblés pour constituer ladite boîte, présente la forme d'une pointe ou d'un biseau.

5 - Dispositif selon la revendication 4, caractérisé en ce que l'embout (30) en forme de pointe est réalisé en donnant au semi-embout de l'un des semi-éléments une forme semi-conique ou pyramidale et au semi-embout de l'autre semi-élément une forme semi-conique, pyramidale ou plane.

6 - Dispositif selon la revendication 4, caractérisé en ce que l'embout (30) en forme de biseau est réalisé en donnant une forme biseautée au semi-embout de l'un des semi-éléments et une forme biseautée ou plane au semi-embout de l'autre semi-élément.

7 - Dispositif selon l'une des revendications 2 à 6, caractérisé en ce qu'au moins l'un des semi-embouts (3, 16) constituant l'embout (30) est un semi-embout mobile, qui est formé de plusieurs parties jointives articulées chacune, par une charnière (11'), à la partie avant du semi-élément portant le semi-embout considéré.

8 - Dispositif selon la revendication 7, caractérisé en ce que les charnières consistent en des épaisseurs moindres de matière dans la paroi du semi-élément.

9 - Dispositif selon l'une des revendications 2 à 8, caractérisé en ce que le fond (8), dont est pourvue l'extrémité arrière de l'un des semi-éléments, est un fond mobile, qui est articulé par une charnière (11) à ladite extrémité du semi-élément et que l'on peut rabattre par rotation autour de cette charnière pour réaliser l'obturation des extrémités arriéres des semi-éléments (A, B) formant la boîte.

10 - Dispositif selon la revendication 9, caractérisé en ce que ladite charnière (11) consiste en au moins une épaisseur moindre de matière dans la paroi du semi-élément.

11 - Dispositif selon la revendication 9 ou 10, caractérisé en ce que le fond mobile (8) est agencé pour réaliser de manière étanche l'obturation des extrémités arrières des semi-éléments (A, B) assemblés pour former la boîte.

12 - Dispositif selon la revendication 11, caractérisé en ce que la périphérie du fond mobile (8) présente une forme (12) adaptée pour réaliser ladite obturation étanche par coincement.

13 - Dispositif selon la revendication 11, caractérisé en ce que la périphérie du fond mobile (8) est pourvue d'au moins une lèvre d'étanchéité (13) adaptée pour réaliser ladite obturation étanche par le biais de cette lèvre.

14 - Dispositif selon l'une des revendications 2 à 13, caractérisé en ce que le fond (8) situé à l'arrière de l'un des semi-éléments est pourvu sur sa face externe d'un poussoir (9) formant garde et protégeant des exsudats susceptibles de s'échapper de la boîte au niveau du fond (8).

15 - Dispositif selon la revendication 14, caractérisé en ce que le poussoir (9) est constitué d'une pluralité d'ailettes (40) de hauteur suffisante pour assurer le rôle de garde.

16 - Dispositif selon l'une des revendications 1 à 15, caractérisé en ce que le semi-élément présentant une extrémité arrière (39) ouverte est pourvu de moyens (17) de préhension à cette extrémité.

17 - Dispositif selon la revendication 16, caractérisé en ce que lesdits moyens (17) de préhension sont disposés de manière à être situés de part et d'autre du fond (8) solidaire de l'extrémité arrière de l'autre semi-élément, lorsque lesdits semi-éléments sont assemblés pour constituer la boîte.

18 - Dispositif selon la revendication 16 ou 17, caractérisé en ce que lesdits moyens de préhension (17) consistent en oreilles de préhension.

19 - Dispositif selon la revendication 18, caractérisé en ce que les oreilles de préhension présentent une face externe pourvue d'aspérités (18).

20 - Dispositif selon l'une des revendications 1 à 19, caractérisé en ce que les deux semi-éléments (A, B) assemblés pour former la boîte comportent chacun des moyens (27, 25) coopérant pour permettre l'assemblage de ces semi-éléments par un clipsage longitudinal, qui rend possible le coulissement longitudinal desdits semi-éléments l'un par rapport à l'autre.

21 - Dispositif selon la revendication 20, caractérisé en ce les moyens d'assemblage par clipsage (27, 25) des semi-éléments (A, B) comportent des clips (27) disposés sur l'un des semi-éléments et des glissières (25) prévues sur l'autre semi-élément et adaptées pour recevoir lesdits clips et de

préférences les cacher.

22 - Dispositif selon l'une des revendications 1 à 21, caractérisé en ce que l'un au moins des semi-éléments (A, B) comporte des évents (26) occultables pour permettre l'évacuation des gaz éventuels lors de la remise en température du contenu de la boîte, lesdits évents étant formés par des évidements discontinus pratiqués dans les parois du semi-élément considéré.

Fig.1

Fig.2

Fig.3

Fig.4

Fig. 7

Fig. 8

Fig. 6

Fig. 5

Fig. 9

EP 0 306 404 A1

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

32

33

35

17

9

A

B

C

Fig. 25

17

31

9

34

B

C

Fig. 26

9

A

C

Fig. 27

29

3

11'

25

A

2

1

25

11

11'

B

15

14

8

16

29

Fig. 28

Fig. 29

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | EP-A-0 196 983  (OCHS)<br>* Colonne 6, ligne 24 - colonne 7, ligne 4; figures 8-11 *<br>--- | 1 | A 21 C   15/00 |
| A | FR-A-2 270 159  (HORVATH)<br>* Figures 1-10 *<br>----- | 1 | |

DOMAINES TECHNIQUES RECHERCHES (Int. Cl.4)

A 21 C
A 47 J
A 23 P
B 65 D

Le présent rapport a été établi pour toutes les revendications

| Lieu de la recherche | Date d'achèvement de la recherche | Examinateur |
|---|---|---|
| LA HAYE | 22-11-1988 | BERRINGTON N.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................

& : membre de la même famille, document correspondant

EPO FORM 1503 03.82 (P0402)